# EUROPÄISCHE PATENTSCHRIFT

(11) **EP 1 483 505 B1**
(45) Veröffentlichungstag und Bekanntmachung des Hinweises auf die Patenterteilung: **16.12.2009**
(21) Anmeldenummer: 03708166.8
(22) Anmeldetag: 03.03.2003
(51) Int. Cl.: F04C 14/22, F16H 61/42, F04B 49/12

(54) **HYDRAULIKSYSTEM MIT EINER VERSTELLPUMPE**
HYDRAULIC SYSTEM COMPRISING A VARIABLE DISPLACEMENT PUMP
SYSTEME HYDRAULIQUE COMPRENANT UNE POMPE A CYLINDREE VARIABLE

(30) Priorität: 06.03.2002 DE 10209964
(43) Veröffentlichungstag der Anmeldung: 08.12.2004
(73) Patentinhaber: ZF Lenksysteme GmbH, 73527 Schwäbisch Gmünd (DE)
(72) Erfinder: SCHMID, Johannes, 73527 Schwäbisch Gmünd (DE)
(86) Internationale Anmeldenummer: PCT/EP2003/002139
(87) Internationale Veröffentlichungsnummer: WO 2003/074878

(56) Entgegenhaltungen:
- DE-A- 3 538 643
- DE-A- 3 840 549
- DE-A- 19 722 495
- US-A- 2 799 995

## Beschreibung

Die Erfindung betrifft ein Hydrauliksystem mit einer Verstellpumpe und einem Verbraucher, insbesondere einem Aggregat eines Kraftfahrzeuges, gemäß dem Oberbegriff des Anspruches 1.

Aus der DE 197 22 495 A1 ,die als nächstliegender Stand der Technik angesehen wird, ist ein Hydrauliksystem der vorgenannten Art bekannt, bei dem die Verstellpumpe auf einen Verbraucher, beispielsweise ein sogenanntes, in Fahrzeugantrieben eingesetztes CVT-Getriebe arbeitet und bei dem die als Flügelzellenpumpe ausgebildete Verstellpumpe in Richtung Hochfahren, d. h. Anheben des Fördervolumens durch einen als Feder ausgebildeten Energiespeicher belastet ist, und in Gegenrichtung hierzu durch Druckbeaufschlagung einer hydraulischen Stelleinrichtung verstellbar ist. Die Druckbeaufschlagung der Stelleinrichtung erfolgt über eine Abzweigung von der druckseitigen Verbindung der Verstellpumpe zum Verbraucher, und in dieser Abzweigung liegen ausgehend von der Verbindung der Verstellpumpe zum Verbraucher ein ansteuerbares Stromregelventil und stromab in Richtung auf den Vorratsbehälter ein Stromventil in Form einer Drossel, und es wird der stromauf der Drossel anstehende Druck als Steuerdruck für einen Steuerschieber verwendet, über den stellungsabhängig die hydraulische Stelleinrichtung zur Verstellung der Verstellpumpe in Richtung Absenken des Fördervolumens durch Anschluss an die Hochdruckseite der Pumpe druckbeaufschlagt wird, oder über den die Stelleinrichtung druckentlastet wird, so dass über den Energiespeicher eine Verstellung in Richtung Hochfahren erfolgt, wobei die Druckentlastung über eine über den Steuerschieber geschaltete Verbindung der hydraulischen Stelleinrichtung gegen den Vorratsbehälter erfolgt.

Die Grundauslegung des Systems bedingt für die Ansteuerung der Verstellpumpe über die hydraulische Stelleinrichtung stets ein Fördervolumen, das über dem vom Verbraucher aufzunehmenden liegt und dieser Fördermengenüberschuss wird bei der bekannten Lösung aufgabengemäß dazu genutzt, sprunghafte Druckerhöhungen der Verbraucherdruckleitung möglich zu machen, um sprunghaften Solldruckanforderungen des Verbrauchers genügen zu können. Hierzu ist auf das Stromregelventil ein Modulierdruck aufschaltbar derart, dass ungeachtet des gegebenen Sollmindestdruckes, bei dem das Stromregelventil öffnet, dieses geschlossen wird, so dass das überschüssige Fördervolumen nicht über die Drossel gegen den Vorratsbehälter abfließen kann, sondern auch dem Verbraucher zugeführt wird. Der mit dieser Umschaltung des Stromregelventils verbundene Druckabbau bedingt eine Umschaltung des Steuerschiebers, so dass die hydraulische Stelleinrichtung druckentlastet wird und die Verstellpumpe über den als Feder ausgebildeten Energiespeicher auf ein höheres Fördervolumen umgestellt werden kann. Ein Aufbau der geschilderten Art ist verhältnismäßig kompliziert und aufwendig und erfordert, schon aus Sicherheitsgründen, ein verhältnismäßig großes überschüssiges Fördervolumen, so dass sich entsprechende Verluste ergeben.

Der Erfindung liegt die Aufgabe zu Grunde, ein Hydrauliksystem der eingangs genannten Art bei möglichst geringen Pumpenverlusten dahingehend auszulegen, dass die Verstellpumpe reaktionsschnell spontanen verbraucherseitigen Anforderungen an die Erhöhung des Fördervolumens genügen kann.

Erreicht wird dies bei einem Hydrauliksystem mit den Merkmalen des Anspruches 1, demzufolge das in der Ansteuerung der hydraulischen Stelleinrichtung liegende Druckregelventil im Verstellpumpe, Verbraucher und Vorratsbehälter umfassenden Hydraulikkreis dem Verbraucher nachgeschaltet vor dem Vorratsbehälter liegt, so dass verbraucherseitige Anforderungen oder Änderungen am Druckregelventil unmittelbar erfasst, und, gegebenenfalls überlagert zu einer Ansteuerung des Druckregelventils durch systemrelevante Parameter, auch in eine entsprechende Beaufschlagung der hydraulischen Stelleinrichtung umgesetzt werden können. Insbesondere kann so die Auslegung der Verstellpumpe bezüglich ihres maximalen Fördervolumens auf den maximalen Bedarf des Verbrauchers zuzüglich einer sehr geringen Überschussmenge erfolgen, so dass sich geringe Verluste ohne die Gefahr der Beeinträchtigung von Funktionen ergeben, da über den Maximalbedarf des Verbrauchers hinaus unter Berücksichtigung zulässiger Leckagen betriebsbedingte Überschussmengen nicht erforderlich sind.

Da zudem bei der erfindungsgemäßen Lösung bei Umstellung auf ein größeres, insbesondere maximales Fördervolumen eine weitgehend verlustfreie Abströmung aus der Stelleinrichtung über das Druckregelventil bei entsprechender Bemessung der jeweiligen Strömungswege sichergestellt ist, ist über den Energiespeicher auch eine nahezu schlagartige Umstellung der Pumpe auf maximales Fördervolumen möglich, so dass sich sehr hohe Reaktionsgeschwindigkeiten ergeben.

Im Sinne der Erhöhung der Reaktionsgeschwindigkeit kann im Rahmen der Erfindung auch die Ansteuerung des Druckregelventiles unter Nutzung von Informationen erfolgen, die auf erhöhte Anforderungen des Verbrauchers hindeuten. So können im Rahmen der Erfindung beispielsweise fahrdynamische Größen, wie Bremssignale oder dergleichen als Indikatoren für bevorstehende Schaltvorgänge genutzt werden, die einen erhöhten Bedarf des Verbrauchers erwarten lassen, so dass eine Verringerung des Abflussquerschnittes des Verbrauchers auf den Vorratsbehälter voreilend für einen Druckanstieg genutzt werden kann, bei gleichzeitiger Beaufschlagung der Stelleinrichtung im Sinne einer Erhöhung des Fördervolumens der Verstellpumpe durch Anschluss der Stelleinrichtung an den Vorratsbehälter und dadurch ermöglichte Verstellung der Verstellpumpe über den Energiespeicher in Richtung auf ein höheres Fördervolumen.

Diese Effekte sind im Rahmen der Erfindung bei minimiertem Aufwand erreichbar, wobei es sich als zweckmäßig erweisen kann, im Zulauf auf den Verbraucher ein Stromventil, insbesondere in Form eines gesteuerten Drosselventiles vorzusehen, das auch unabhängig von Anforderungen des Verbrauchers ansteuerbar ist, um beispielsweise temperaturbedingten Änderungen der Viskosität des Druckmittels oder dergleichen Rechnung tragen zu können.

Insbesondere lässt sich ein derart gestaltetes Drosselventil im Rahmen der Erfindung mit einem im Kurzschluss zur Verstellpumpe liegenden Druckbegrenzungsventil nutzen, um, ohne negative Einflüsse auf den Verbraucher und auf die in der Grundförderung auf die Bedürfnisse des Verbrauchers abgestimmte Regelung der Verstellpumpe, die Verstellpumpe bei über die Grundförderung angehobenem Fördervolumen in Verbindung mit dem Druckbegrenzungsventil als Verlustquelle zu betreiben, um auf kurzem Wege ohne Zusatzeinrichtung eine schnelle Aufheizung des Druckmediums und dadurch einen schonenderen und häufig auch komfortableren Betrieb des Verbrauchers zu ermöglichen. Hierbei kann, bezogen auf den Fahrbetrieb, beispielsweise auch der Standbetrieb des Fahrzeuges nach dem Anlassen bis zum Anfahren bei temperaturbedingt häufig angehobener Lehrlaufdrehzahl für das Vorheizen des Druckmediums genutzt werden, wobei eine derartige Belastung des Motors in dieser Phase auch im Hinblick auf ein schnelleres Aufheizen des Motores zur Verringerung des kaltlaufbedingten Verschleißes und der Funktionen der für die Abgasreinigung vorgegebenen Einrichtungen zweckmäßig sein kann.

Mit der Erfindung wird somit ein Hydrauliksystem geschaffen, das für unterschiedliche Verbraucher, wie beispielsweise CVT-Getriebe oder auch Servolenkungen, in vorteilhafter Weise einzusetzen ist, wobei trotz einfachen und energiesparenden Aufbaus vielfältige Einflussmöglichkeiten und gute Voraussetzungen für einen schonenden sowie auch komfortablen Verbraucherbetrieb gegeben sind.

Weitere Einzelheiten und Merkmale der Erfindung ergeben sich aus den Ansprüchen. Ferner wird die Erfindung nachstehend anhand eines Ausführungsbeispieles erläutert, das ein Hydrauliksystem der erfindungsgemäßen Art in einer Schemadarstellung veranschaulicht.

Das Hydrauliksystem 1 umfasst eine Verstellpumpe 2, die mit einem Verbraucher 3 in einem Kreislauf liegt, der durch die von der Verstellpumpe 2 ausgehende Druckleitung 4, die auf den Verbraucher 3 mündet, und die vom Verbraucher 3 ausgehende Rücklaufleitung 5 gebildet ist, die mit dem Vorratsbehälter 7 in Verbindung steht, wobei die Rücklaufleitung 5 im Ausführungsbeispiel an die vom Vorratsbehälter 7 ausgehende Saugleitung 8 der Verstellpumpe 2 angeschlossen ist. Parallel zum vorgeschilderten druckseitigen Kreislauf liegt ein Kurzschlusskreislauf mit einer Leitung 9, die ausgehend vom Abschnitt 10 der Druckleitung 4 über ein Druckbegrenzungsventil 11 mit dem Vorratsbehälter 7 bzw. der Saugseite der Verstellpumpe 2 in Verbindung steht und die im Ausführungsbeispiel auf die Saugleitung 8 ausmündet.

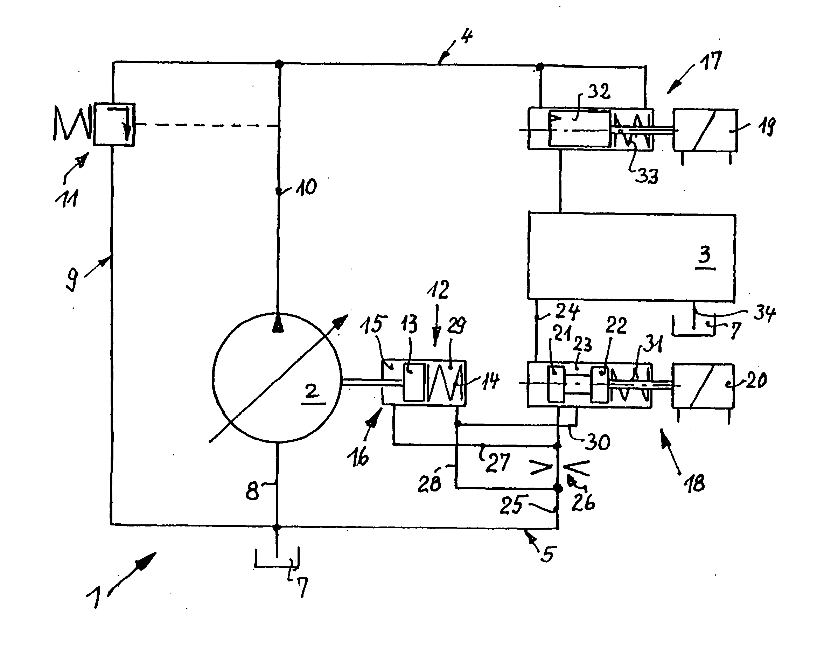

Die in der Zeichnung nur schematisch dargestellte Verstellpumpe 2 ist bevorzugt als an sich bekannte Flügelzellenpumpe ausgebildet, die durch Verlagerung ihres Hubringes in ihrem Fördervolumen einstellbar ist. Der Hubring ist hierzu einerseits über einen bevorzugt als Feder ausgebildeten Energiespeicher beaufschlagt, und zwar in seiner das Fördervolumen anhebenden Stellrichtung, und andererseits, in Gegenrichtung hierzu, über eine hydraulische Stelleinrichtung, wobei die zugehörigen Stellmittel innerhalb des den Hubring umschließenden Pumpengehäuses angeordnet sind.

Im Ausführungsbeispiel wird dies funktional über eine hydraulische Stelleinrichtung 16 veranschaulicht, die - als Teil der Stelleinheit 12 -, einen Stellkolben 13 aufweist, der in Richtung Anheben des Fördervolumens, also in Richtung Hochfahren der Verstellpumpe 2 über den als Feder 14 veranschaulichten Energiespeicher beaufschlagt ist und der in Gegenrichtung hierzu hydraulisch beaufschlagbar ist, wobei der Stellkolben 13 mit der zugehörigen Druckkammer 15 die hydraulische Stelleinrichtung 16 veranschaulicht.

Der Verbraucher 3 ist beispielsweise und bevorzugt durch ein Aggregat eines Kraftfahrzeuges, das nicht weiter dargestellt ist, gebildet, wobei als solche Aggregate unter anderem Servolenkungen, CVT-Getriebe oder dergleichen in Frage kommen. Im durch die Druckleitung 4 symbolisierten druckseitigen Zulauf auf den Verbraucher 3 liegt ein Stromventil in Form einer verstellbaren Drossel 17, rücklaufseitig ist in der Rücklaufleitung 5, dem Verbraucher 3 nachgeordnet, ein Druckregelventil 18 angeordnet. Das als Drosselventil ausgebildete Stromventil 17 und das Druckregelventil 18 sind jeweils als gesteuerte Ventile ausgebildet und als Steller sind im Ausführungsbeispiel jeweils Magnetsteller 19 bzw. 20 vorgesehen, die in nicht näher gezeigter Weise über ein Steuergerät ansteuerbar sind, in dem fahrzeug- und/oder verbraucherrelevante Parameter verarbeitet und in entsprechende Stellsignale umgesetzt werden.

Das Druckregelventil 18 ist als Schieberventil ausgebildet, dessen Schieber Kolben 21 und 22 aufweist, die eine dazwischen liegende Ringkammer 23 begrenzen. Auf das Druckregelventil 18 mündet ein Leitungsabschnitt 24 der Rücklaufleitung 5, die sich anschließend an das Druckregelventil 18 in einem Leitungsabschnitt 25 fortsetzt, der zwischen dem Druckregelventil 18 und dem Anschluss der Rücklaufleitung an die Saugleitung 8 verläuft. Im Leitungsabschnitt 25 liegt eine Drosselstelle 26, und stromauf der Drosselstelle 26 zweigt eine Steuerleitung 27 auf die Druckkammer 15 der Stelleinrichtung 16 ab. Des Weiteren ist eine Verbindungsleitung 28 zwischen dem die Feder 14 aufnehmenden Raum 29 und dem Leitungsabschnitt 25 vorgesehen, wobei die Verbindungsleitüng 28 stromab der Drossel 26 an den Leitungsabschnitt 25 angeschlossen ist. Auf die Verbindungsleitung 28 mündet, ausgehend vom Druckregelventil 18, eine Leitung 30, die - über die Verbindungsleitung 28 - mit dem Vorratsbehälter 7 bzw. der Saugleitung 8 in Verbindung steht, und auch mit dem Raum 29.

Die Verstellpumpe 2 arbeitet mit einem auf den Verbraucher 3 abgestimmten Fördervolumen und es wird der jeweils vom Verbraucher 3 nicht aufgenommene Volumenanteil als Überschussmenge über den Leitungsabschnitt 24 dem Druckregelventil 18 zugeführt und gelangt von dort über den Leitungsabschnitt 25 der Rücklaufleitung 5 zum Vorratsbehälter 7 bzw. auf die Saugseite der Pumpe 2. Das vom Verbraucher 3 abgegebene Volumen, insbesondere Leck- und Ablaufvolumen, wird entweder, wie über den Anschluss 34 angedeutet, auf den Vorratsbehälter 7 direkt oder über die Rücklaufleitung 5 zurückgespeist.

Für das Druckregelventil 18 ist über die Feder 31 die Nulllage einstellbar und über die Zweigleitung 27, die vom Leitungsabschnitt 25 abzweigt, ist die Druckkammer 15 der Stelleinrichtung 16 durch das vom Druckregelventil 18 abgegebene, überschüssige Fluid zu beaufschlagen, womit das geometrische Fördervolumen der Pumpe 2 zurückgenommen wird. Der zum Stellkolben 13 rückseitige Raum 29 steht seinerseits über die Verbindungsleitung 28 mit der Rücklaufleitung 5 in Verbindung, und über die an die Verbindungsleitung 28 anschließende Leitung 30 auch mit der Ringkammer 23 des Druckregelventiles 18, so dass beim Abregeln der über das Druckregelventil 18 laufenden Verbindung zwischen den Leitungsabschnitten 24 und 25 und daraus folgender Verstellung der Verstellpumpe 2 in Richtung auf die Erhöhung der Fördermenge durch Verschieben des Stellkolbens 13 über die Feder 14 unter Verringerung des Volumens der Druckkammer 15 und daraus folgender Fluidverdrängung über die Zweigleitung 27 über die Ringkammer 23 die Leitung 30 beaufschlagt wird, die auf die Verbindungsleitung 28 mündet, womit eine Rückführung des aus der Druckkammer 15 verdrängten Fluids auf den Raum 29 symbolisch dargestellt ist. Eine solche Rückführung ist im Rahmen der Erfindung zweckmäßig, um über den Energiespeicher in Form der Feder 14 bei Druckentlastung der Druckkammer 15 eine möglichst schlagartige Umstellung der Pumpe 2 auf höheres Fördervolumen zu ermöglichen, und zwar bei möglichst geringem abflussseitigem Widerstand.

Mit der Erfindung ist somit eine Lösung geschaffen, bei der die Pumpe 2, bezogen auf die jeweils gegebenen Randbedingungen, in ihrem Fördervolumen auf den Bedarf des Verbrauchers 3 eingeregelt wird. Ergibt sich verbraucherseitig ein größerer Bedarf, oder wird dieser über das Steuergerät signalisiert und der Kolben 21 über den Magnetsteller 22 im Sinne der Verringerung des Überströmquerschnittes zwischen den Leitungsabschnitten 24 bzw. 25 verstellt, so verringert sich der Druck in der Kammer 15 und es erfolgt über die Feder 14 als Energiespeicher eine Verstellung der Pumpe 2 in Richtung Hochfahren, wobei das aus der Druckkammer 15 verdrängte Volumen auf den Leitungsabschnitt 25 zurückgedrängt und wiederum in den Kreislauf eingespeist wird.

Ergeben sich schlagartige Bedarfsanforderungen des Verbrauchers 3, so wird über entsprechende Verstellung des Schiebers des Druckregelventils 18 die Ringkammer 23 mehr oder minder in Überdeckung zu dem Leitungsabschnitt 25 und zur Leitung 30 gebracht, so dass unter Umgehung der Drossel 26 ein schnelles, weitgehend ungedrosseltes Rückströmen in den Kreislauf möglich ist, womit ein schnelles Hochfahren der Verstellpumpe 2 im Bedarfsfall erreicht wird, da der durch die Feder 14 gebildete Energiespeicher gegen die drucklos geschaltete Druckkammer 15 arbeitet und bei entsprechend groß bemessenen, ungedrosselten Ablaufwegen - bevorzugt mit Anschluss auf der Gegenseite zur Druckkammer 15, nämlich den Raum 29 - eine schlagartige Verstellung über die Feder 14 ermöglicht.

Über das Stromventil 17, das über den Magnetsteller 19 zusätzlich ansteuerbar ist und das durch die Abstützung seines Kolbens 32 über die Feder 33 die Einstellung eines Mindestdrucks möglich macht, oberhalb dessen die Beaufschlagung des Verbrauchers 3 freigegeben wird, lässt sich auf Grund der Beaufschlagung über den Magnetsteller 19 dieser Mindestdruck variieren, aber auch die Leitungsverbindung der Druckleitung 4 auf den Verbraucher 3 mehr oder minder absperren. Damit lassen sich beispielsweise temperaturbedingte Viskositätseinflüsse auf den Verbraucher 3 und auf dessen Arbeitsweise zumindest teilweise eliminieren, insbesondere aber ist es möglich, insbesondere in Verbindung mit einer entsprechenden Ansteuerung des Druckregelventils 18, die Verstellpumpe 2 auf eine Fördermenge einzustellen, die über dem verbraucherseitigen Bedarf bzw. Anforderungen liegt, so dass das in der durch die Leitung 9 gebildeten Kurzschlussverbindung liegende Druckbegrenzungsventil 11 anspricht, mit dem Effekt, dass sich durch den Druckabbau über das Druckbegrenzungsventil 11 eine Erwärmung des Druckmediums ergibt, die, beispielsweise in der Startphase bei kalten Temperaturen, zur schnellen Aufheizung des Druckmediums auf Temperaturen genutzt werden kann, die, auch im Hinblick auf die Zähigkeit des Druckmediums, den Anforderungen des Verbrauchers für eine einwandfreie, komfortable Arbeitsweise genügen. Dies kann vorgeschaltet zur Freigabe der Versorgung für den Verbraucher 3, oder auch parallel zur Versorgung des Verbrauchers 3 genutzt werden.

Durch die Erfindung wird somit für ein Hydrauliksystem mit Verstellpumpe und Verbraucher ein einfacher Aufbau geschaffen, der durch die im Rücklauf vom Verbraucher vorgesehene Anordnung eines gesteuerten Druckregelventiles in Verbindung mit einem im druckseitigen Zulauf auf den Verbraucher liegenden Drosselventil und einem im Kurzschluss zur Verstellpumpe liegenden Druckbegrenzungsventil neben dem schlagartigen Hochfahren der Verstellpumpe auch eine Nutzung der Pumpenergie zu Heizzwecken ermöglicht.

## Patentansprüche

1. Hydrauliksystem mit einer Verstellpumpe (2) und einem Verbraucher (3), insbesondere einem Aggregat eines Kraftfahrzeuges, bei dem die Verstellpumpe, die saugseitig mit einem Vorratsbehälter (7) in Verbindung steht und im Kreislauf druckseitig auf den rücklaufseitig an den Vorratsbehälter (7) angeschlossenen Verbraucher (3) fördert und die in einer das Fördervolumen anhebenden Stellrichtung über einen Energiespeicher belastet und in Gegenrichtung über eine hydraulische Stelleinrichtung (16) beaufschlagt ist, die in Abhängigkeit vom Versorgungsbedarf des Verbrauchers über ein Druckregelventil (18) entgegen der Speicherkraft des Energiespeichers druckbeaufschlagt oder zur Druckbelastung an den Vorratsbehälter angeschlossen ist,
**dadurch gekennzeichnet,**
**dass** das Druckregelventil (18) im Rücklauf (5) des Verbrauchers (3) auf dem Vorratsbehälter (7) liegt und zur Druckbeaufschlagung der Stelleinrichtung (16) druckabhängig den Rücklauf des Verbrauchers (3) auf den Vorratsbehälter (7) freigibt, wobei der Rücklauf stromab des Druckregelventils (18) gedrosselt und zwischen Druckregelventil (18) und Drosselstelle (26) über eine Zweigleitung (27) mit der Stelleinrichtung (16) verbunden ist, die zu ihrer Druckentlastung über einen über das Druckregelventil (18) führenden, freigeschalteten Verbindungsweg an den Vorratsbehälter (7) angeschlossen ist.

2. Hydrauliksystem nach Anspruch 1,
**dadurch gekennzeichnet,**
**dass** der Verbindungsweg einen zum gedrosselten Rücklauf (Leitungsabschnitt 25) parallelen, ungedrosselten Ablaufweg (Leitung 30) zwischen Druckregelventil (18) und Vorratsbehälter (7) umfasst.

3. Hydrauliksystem nach Anspruch 1 oder 2,
**dadurch gekennzeichnet,**
**dass** das Druckregelventil (18) in Abhängigkeit von systemrelevanten Parametern, insbesondere Betriebsparametern des Verbrauchers (3) angesteuert ist.

4. Hydrauliksystem nach einem der vorhergehenden Ansprüche,
**dadurch gekennzeichnet,**
**dass** im Zulauf auf den Verbraucher (3) ein gesteuertes Stromventil (17), insbesondere ein Drosselventil, angeordnet ist.

5. Hydrauliksystem nach einem der vorhergehenden Ansprüche,
**dadurch gekennzeichnet,**
**dass** die Verstellpumpe (2) als Flügelzellenpumpe ausgebildet ist.

6. Hydrauliksystem nach einem der vorhergehenden Ansprüche,
**dadurch gekennzeichnet,**
**dass** der Verstellpumpe (2) ein Kurzschlusskreislauf (Leitung 9) mit Druckbegrenzungsventil (11) zugeordnet ist.

7. Hydrauliksystem nach Anspruch 6,
**dadurch gekennzeichnet,**
**dass** im Zulauf auf das stromauf zum Verbraucher (3) liegende Stromventil (17) ein über dem Ansprechdruck des Druckbegrenzungsventiles (11) liegender Druck einsteuerbar ist.

8. Hydrauliksystem nach Anspruch 6,
**dadurch gekennzeichnet,**
**dass** der über dem Ansprechdruck des Druckbegrenzungsventiles (11) liegende Druck über das Stromventil (17) einsteuerbar ist.

9. Hydrauliksystem nach Anspruch 8,
**dadurch gekennzeichnet,**
**dass** der stromauf des Stromventiles (17) anstehende Druck über dem für den stromab des Stromventiles (17) liegende Verbraucher zulässigen Arbeitsdruck liegt.

10. Hydrauliksystem nach einem der Ansprüche 6 bis 9, **gekennzeichnet**
**durch** einen durch Entspannung über das Druckbegrenzungsventil (11) erfolgenden Heizbetrieb.

11. Hydrauliksystem nach Anspruch 10,
**dadurch gekennzeichnet,**
**dass** der Heizbetrieb zum Betrieb des Verbrauchers (3) vorgelagert ist.

12. Hydrauliksystem nach Anspruch 9 oder 10,
**dadurch gekennzeichnet,**
**dass** der Heizbetrieb zum Betrieb des Verbrauchers (3) parallel erfolgt.

## Claims

1. Hydraulic system having a variable displacement pump (2) and a consumer (3), in particular an assembly of a motor vehicle, in which the variable displacement pump which is connected on the suction side to a reservoir (7) and supplies, on the delivery side in the circuit, the consumer (3) connected to the reservoir (7) on the return side, and which is loaded by an energy store in an adjusting direction which increases the swept volume, and is acted on by a hydraulic adjusting device (16) in the opposite direction, which adjusting device has pressure applied to it via a pressure-regulating valve (18) counter to the stored force of the energy store as a function of the supply demand from the consumer or is connected to the reservoir so as to apply pressure, **characterized in that** the pressure-regulating valve (18) is situated in the return line (5) of the consumer (3) to the reservoir (7) and opens the return line of the consumer (3) to the reservoir (7) as a function of the pressure in order to apply pressure to the adjusting device (16), the return line having a throttle downstream of the pressure-regulating valve (18) and being connected, between the pressure-regulating valve (18) and throttling point (26), to the adjusting device (16) via a branch line (27), said adjusting device (16) being connected, in order to relieve the pressure on it, to the reservoir (7) via an opened connecting path which leads via the pressure-regulating valve (18).

2. Hydraulic system according to Claim 1,
**characterized in that** the connecting path comprises an unthrottled discharge path (line 30) between the pressure-regulating valve (18) and reservoir (7) which is parallel to the throttled return line (line section 25).

3. Hydraulic system according to Claim 1 or 2,
**characterized in that** the pressure-regulating valve (18) is activated as a function of system-relevant parameters, in particular operating parameters of the consumer (3).

4. Hydraulic system according to one of the preceding claims, **characterized in that** a controlled flow-control valve (17), in particular a throttling valve, is arranged in the feed line to the consumer (3).

5. Hydraulic system according to one of the preceding claims, **characterized in that** the variable displacement pump (2) is designed as a vane cell pump.

6. Hydraulic system according to one of the preceding claims, **characterized in that** the variable displacement pump (2) is assigned a short-circuit cycle (line 9) with a pressure-relief valve (11).

7. Hydraulic system according to Claim 6,
**characterized in that** a pressure which is higher than the response pressure of the pressure-relief valve (11) can be applied in a controlled manner to the feed line to the flow-control valve (17) lying upstream of the consumer (3).

8. Hydraulic system according to Claim 6,
**characterized in that** the pressure which is higher than the response pressure of the pressure-relief valve (11) can be applied in a controlled manner via the flow-control valve (17).

9. Hydraulic system according to Claim 8,
**characterized in that** the pressure upstream of the flow-control valve (17) is higher than the operating pressure which is permissible for the consumer situated downstream of the flow-control valve (17).

10. Hydraulic system according to one of Claims 6 to 9, **characterized by** heating operation taking place by means of pressure relief via the pressure-relief valve (11).

11. Hydraulic system according to Claim 10,
**characterized in that** the heating operation takes place before the operation of the consumer (3).

12. Hydraulic system according to Claim 9 or 10,
**characterized in that** the heating operation takes place in parallel with the operation of the consumer (3).

## Revendications

1. Système hydraulique comprenant une pompe à débit variable (2) et une charge (3), en particulier une unité d'un véhicule automobile, dans lequel la pompe à débit variable, qui est en liaison du côté de l'aspiration avec un réservoir (7) et qui refoule dans le circuit, du côté de la pression, vers les charges (3) raccordées du côté du reflux au réservoir (7), et qui est chargée, dans la direction de réglage augmentant le volume refoulé, par le biais d'un accumulateur d'énergie, et qui est sollicitée, dans la direction opposée, par le biais d'un dispositif de réglage hydraulique (16), qui est sollicité en pression en fonction du besoin d'alimentation de la charge par le biais d'une soupape de régulation de pression (18) à l'encontre de la force d'accumulation de l'accumulateur d'énergie ou qui est raccordé au réservoir en vue de la sollicitation en pression,
**caractérisé en ce que**
la soupape de régulation de pression (18) se situe dans le retour (5) de la charge (3) sur le réservoir (7) et pour la sollicitation en pression du dispositif de réglage (16), libère, en fonction de la pression, le retour de la charge (3) vers le réservoir (7), le retour étant étranglé en aval de la soupape de régulation de pression (18) et étant connecté entre la soupape de régulation de pression (18) le point d'étranglement (26) par le biais d'une conduite de ramification (27) au dispositif de réglage (16), qui est raccordé, pour sa décharge de pression, par le biais d'une voie de connexion connectée librement et conduisant à travers la soupape de régulation de pression (18), au réservoir (7).

2. Système hydraulique selon la revendication 1,
**caractérisé en ce que**
la voie de connexion comprend une voie d'écoulement (conduite 30) non étranglée et parallèle au retour étranglé (portion de conduite 25), entre la soupape de régulation de pression (18) et le réservoir (7).

3. Système hydraulique selon la revendication 1 ou 2,
**caractérisé en ce que**
la soupape de régulation de pression (18) est commandée en fonction de paramètres relatifs au système, notamment des paramètres de fonctionnement de la charge (3).

4. Système hydraulique selon l'une quelconque des revendications précédentes,
**caractérisé en ce que**
dans l'alimentation vers la charge (3), on dispose une soupape de courant commandée (17), en particulier une soupape d'étranglement.

5. Système hydraulique selon l'une quelconque des revendications précédentes,
**caractérisé en ce que**
la pompe à débit variable (2) est réalisée sous forme de pompe à palettes.

6. Système hydraulique selon l'une quelconque des revendications précédentes,
**caractérisé en ce que**
la pompe à débit variable (2) est associée à un circuit de court-circuit (conduite 9) avec une soupape de limitation de la pression (11).

7. Système hydraulique selon la revendication 6,
**caractérisé en ce que**
dans l'alimentation à la soupape de courant (17) située en amont de la charge (3), une pression située au-dessus de la pression de réaction de la soupape de limitation de pression (11) peut être commandée.

8. Système hydraulique selon la revendication 6,
**caractérisé en ce que**
la pression située au-dessus de la pression de réaction de la soupape de limitation de pression (11) peut être commandée par le biais soupape de courant (17).

9. Système hydraulique selon la revendication 8,
**caractérisé en ce que**
la pression s'appliquant en amont de la soupape de courant (17) se situe au-dessus de la pression de travail admissible pour la charge située en aval de la soupape de courant (17).

10. Système hydraulique selon l'une quelconque des revendications 6 à 9,
**caractérisé par**
un mode de chauffage s'appliquant par détente par le biais de la soupape de limitation de pression (11).

11. Système hydraulique selon la revendication 10,
**caractérisé en ce que**
le mode de chauffage est monté en amont pour le fonctionnement de la charge (3).

12. Système hydraulique selon la revendication 9 ou 10,
**caractérisé en ce que**
le mode de chauffage a lieu en parallèle au fonctionnement de la charge (3).
